# EUROPEAN PATENT SPECIFICATION

(11) **EP 3 704 936 B1**
(45) Date of publication and mention of the grant of the patent: **27.03.2024**
(21) Application number: 20158904.1
(22) Date of filing: 21.02.2020
(51) Int. Cl.: A01K 77/00, A01K 97/10, A01K 97/12, F16D 1/108, F16B 21/16

(54) **A QUICK-RELEASE CONNECTOR**
SCHNELLTRENNKUPPLUNG
CONNECTEUR À LIBÉRATION RAPIDE

(30) Priority: 04.03.2019 GB 201902914
(43) Date of publication of application: 09.09.2020
(73) Proprietor: Fox International Group Limited, Warley Brentwood Essex CM14 5EG (GB)
(72) Inventor: Bambrough, Thomas Malcolm, Dagenham, Essex RM8 1RR (GB)
(74) Representative: Hanson, William Bennett

(56) References cited:
- CN-U- 205 884 439
- GB-A- 2 509 107
- US-A1- 2009 148 230

## Description

The present invention relates to a quick-release connector for connecting a first part constituted by an angling device to a second part constituted by a bank stick or a buzz bar or other angling device, the quick-release connector comprising an insert having a circular cross-section and being secured to one of such first and second parts when the connector is in use, and a pod having a recess of circular cross-section to receive the insert and being secured to the other of such first and second parts when the connector is in use, the connector further comprising at least one displaceable locking member retained within the pod and being displaceable relative to the pod between an engagement position in which it engages the insert when the connector is in use to lock the insert and the pod and hence such first and second parts together when the connector is in use, and a non-engagement position in which it does not so engage the insert, and a locking component retained on the pod and moveable between a first position in which it holds the displaceable locking member in the said engagement position and a second position in which the locking member is released from the said engagement position, in which the movement of the locking component between its said first and second positions is a rotary movement.

One such connector, apart from the movement of the locking component between the first and second positions which is linear rather than rotary, is disclosed in GB 2403120 A.

A problem encountered with such a connector is that it needs to be relatively long to accommodate the movement of the locking component, and this in turn affects the strength of the connector and the stability of the assembly when the connector is in use.

A connector having the construction set out in the opening paragraph of the present patent specification is disclosed in GB2509107A.

The present invention is directed to a quick-release connector having the construction set out in the opening paragraph of the present specification, in which the insert is provided with at least one recess on an outer surface to receive the at least one locking member.

This provides a relatively simple and easily made means of engagement.

The said at least one displaceable locking member that is retained within the pod may comprise a ball-bearing.

Such a locking member facilitates its movement between its engagement and non-engagement positions by virtue of its rounded surface and the ease with which it can be rolled.

The said at least one recess may be part spherical.

This reduces the likelihood of jamming.

If the locking member is a ball-bearing and the recess is part spherical the respective radii of curvature of the ball-bearing and the said at least one recess may match.

This reduces the likelihood of jamming still further.

The pod may be provided with at least one guide cavity within which the said at least one locking member is retained and within which the said at least one locking member is guided between the said engagement and non-engagement positions.

Such a cavity provides the advantage of correct positioning of the locking member.

There may be a plurality of such cavities spaced apart around the pod and retaining respective locking members, and a plurality of recesses spaced apart around the insert, the angular spacing of the cavities and the recesses being the same to enable them to be brought into registration with one another.

The locking component may comprise a ring.

This facilitates the rotary movement of the locking member between its said first and second positions.

The ring may be provided with at least one internal cam which engages the said at least one locking member when the connector is in use to move the locking member from its said non-engagement position to its said engagement position as the ring is rotated.

This provides a smooth transition between the locked and unlocked conditions of the connector with reduced likelihood of jamming.

The quick-release connector may further comprise a spring attached to the pod and the locking component in such a manner as to urge the locking component towards its said first position. This reduces the likelihood of accidental release.

The spring may be a helical torsion spring.

This is advantageous over a helical compression spring such as is described in GB 2403120 A because gaps are not needed between successive turns of the spring to accommodate compression, providing a further facilitation of a shorter quick-release connector, and therefore a stronger and more stable connection, than that provided by GB 2403120 A.

The pod may be provided with an aperture for a buzz bar.

This enables simple insertion of the buzz bar through or into the pod.

The pod may be provided with a removeable cap portion to facilitate securement of the pod to the buzz bar.

A bolt may secure components of the pod to one another.

This avoids the need for cumbersome apparatus such as shafts and external hand screws.

The present invention extends to an assembly comprising an angling device such as a bite detector connected to a buzz bar and/or a bank stick and/or other angling device by one or more quick-release connectors embodying the present invention.

An example of a quick-release connector embodying the present invention will now be described in greater detail with reference to the accompanying drawings, in which:
Figure 1 is an exploded view of a quick-release connector embodying the present invention;
Figure 2 is an exploded view of a quick-release connector constituting a second embodiment of the present invention;
Figure 3 shows on a larger scale a cross-section in the plane III-III indicated in Figure 5 of the quick-release connector shown in Figure 2 in a locked condition;
Figure 4 shows a cross-section of the quick-release connector shown in Figure 3, in an unlocked condition;
Figure 5 shows an axial section of the quick-release connector shown in Figures 3 and 4 in the plane V-V indicated in Figure 3, in a locked condition;
Figure 6 shows an axial section of the of the connector shown in Figure 5 in an unlocked condition; and
Figure 7 is a perspective view of an assembly comprising two quick-release connectors each as shown in Figure 2 in an assembled condition, connecting respective bite detectors to a buzz bar which itself is connected to a bank stick by way of a quick-release connector constituting a third embodiment of the present invention.

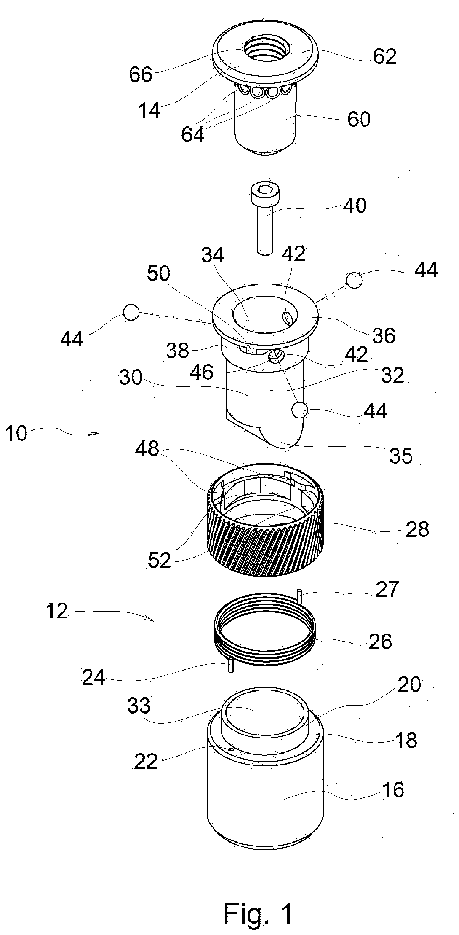

Figure 1 shows a quick-release connector 10 comprising a cylindrical pod 12 and a cylindrical insert 14 which can be locked together in the manner described hereinafter. The pod 12 comprises an outer cylindrical shell 16 the exterior of which is provided with a shoulder 18 at an intended upper end of the shell 16, from which upwardly extends a neck portion 20. A small hole 22 extends downwardly into the shoulder 18 and receives one end 24 of a helical torsion spring 26 the other end 27 of which is received in a corresponding hole (not shown) in the interior of a locking component in the form of a knurled ring 28, when the connector is in the assembled condition with the ring 28 sitting on the shoulder 18.

The pod 12 further comprises an inner cylindrical shell 30 having a circular-sectioned cylindrical outer surface 32 which fits snugly in a circular-sectioned cylindrical inner surface 33 of the outer shell 16. The shell 30 also has a circular-sectioned cylindrical inner surface 34 defining a recess for the insert 14. The lower end 35 of the inner shell 30 is rounded so that it is a transverse portion which is received in a complementarily shaped internal recess (not shown) in the outer shell 16 when the connector is in an assembled condition, to inhibit relative rotation between the inner and outer shells 30 and 16. The inner shell 30 has a flange 36 at its upper end, and a shoulder 38 between the flange 36 and the cylindrical outer surface 32. In the assembled condition of the connector 10, the shoulder 38 sits on the lip of the neck portion 20, the spring 26 surrounds the neck portion 20, and the ring 28 is located between shoulder 18 of the outer shell 16 and the flange 36 of the inner shell 30. All these parts are held together by a single bolt 40 which extends through the lower end 35 of the inner shell 30 into the lower end of the outer shell 16.

The shoulder 38 of the inner shell 30 is provided with three cavities 42 constituted by circularly cylindrical through-holes which retain respective ball-bearings 44 which each have a diameter less than that of the cavity 42 in which it is retained. These holes are narrower at their respective inside ends 46, having there a diameter less than that of the ball-bearings 44, so that the ball-bearings 44 can not drop out into the interior of the shell 30. At the same time they can not drop outwardly from the cavities 42 because of the presence of the ring 28 when the connector 10 is in the assembled condition.

The ring 28 has three equiangularly spaced protuberances 48 on its interior just below its upper lip, and the inner shell 30 has three equiangularly spaced protuberances 50 on the underside of its flange 36. These protuberances are so located that they limit the amount of rotational movement available for the ring 28 to about 60° when the connector 10 is in the assembled condition.

The ring 28 is provided with cams 52 around its interior having surfaces which vary in their distance from the axis of the connector 10, between a distance from that axis substantially equal to the distance from that axis of the outer surface of the shoulder 38 of the inner shell 30 to a distance which is a little greater than the sum of the distance from that axis of the inner surface of the inner shell 30 and the diameter of one of the ball-bearings 44.

The insert 14 is a very much simpler part than the pod 12, having a circularly-sectioned cylindrical outer surface 60 of a diameter just less than that of the interior cylindrical surface of the inner shell 30. The insert 14 has a flange 62 at its upper end. A series of part-spherical recesses 64 each of a radius of curvature about the same as that of the ball-bearings 44 are provided around the top of the cylindrical surface 60 under the flange 62. There are twelve such recesses 64, but there could be fewer or there could be more, provided there is at least one orientation in which respective recesses 64 are in alignment with the cavities 42 when the insert 14 is inserted into the inner shell 30 of the pod 12.

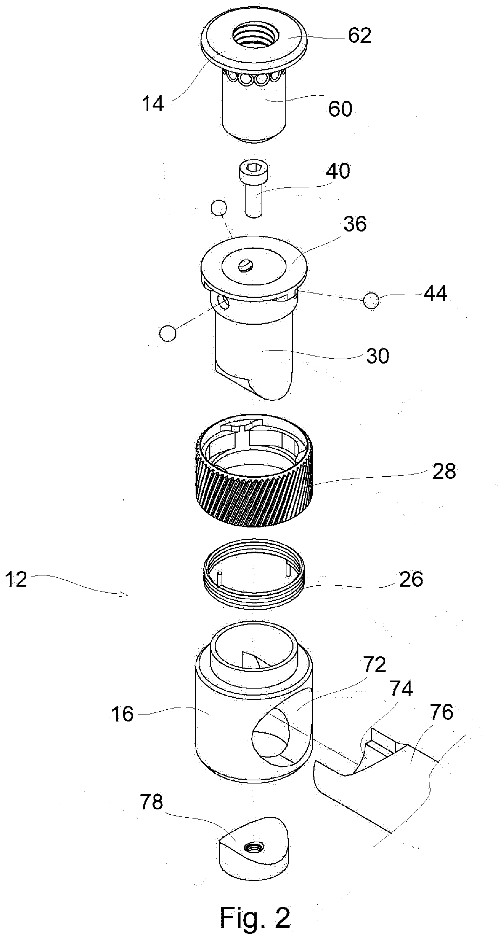

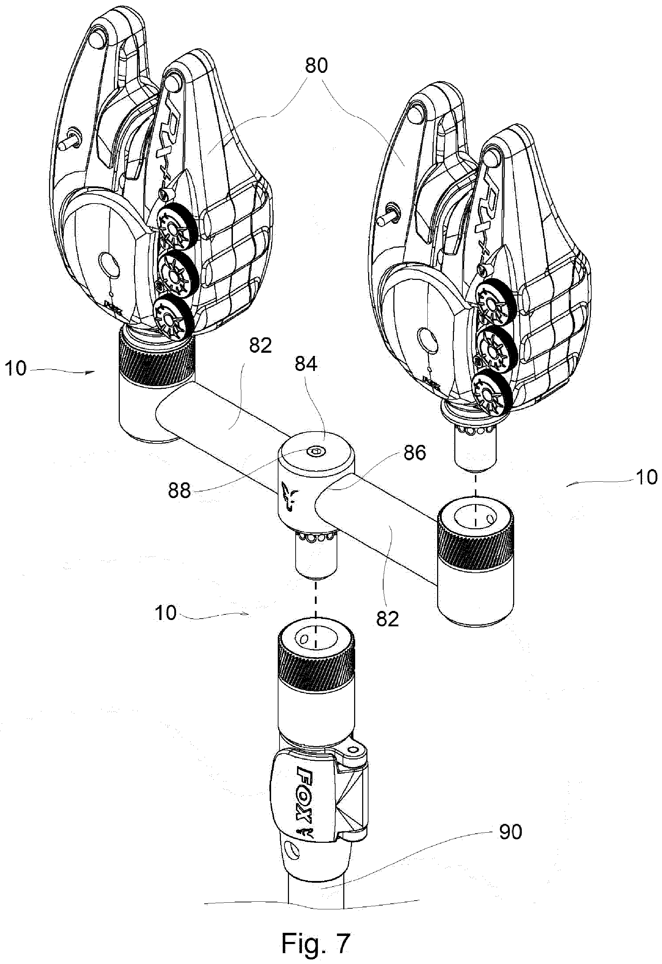

The insert 14 has an internal screwthread 66 into which can be screwed the fastening screw of an angling device such as a bite detector 70 shown in Figure 7. The underside of the pod 12 may be provided with a screw (not shown) for attachment to a bank stick for example, or an aperture 72 such as is shown in the modification of Figure 2, which receives a hollow end 74 of a buzz bar 76 formed with a through-hole (not shown) through which extends the bolt 40 into a cap 78 located underneath the buzz bar 76 when the assembly is complete, in the underside of the outer shell 16.

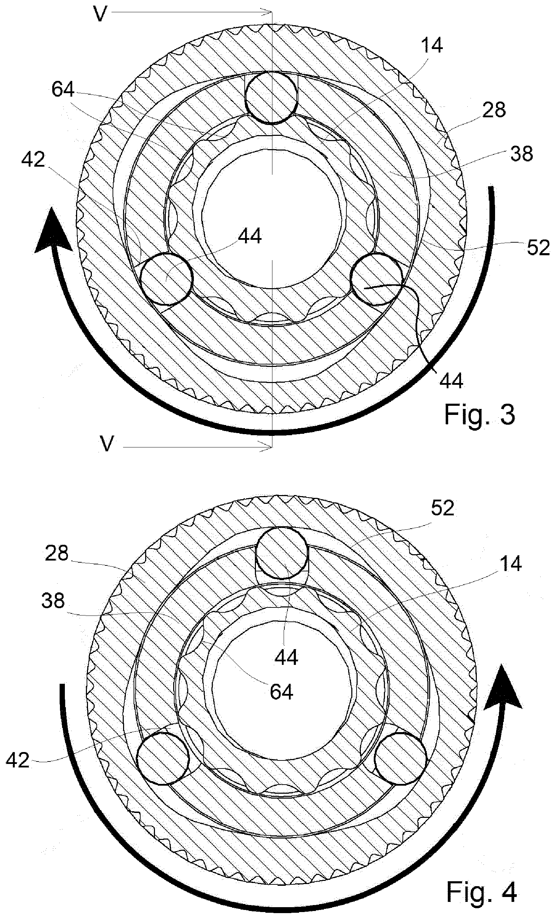

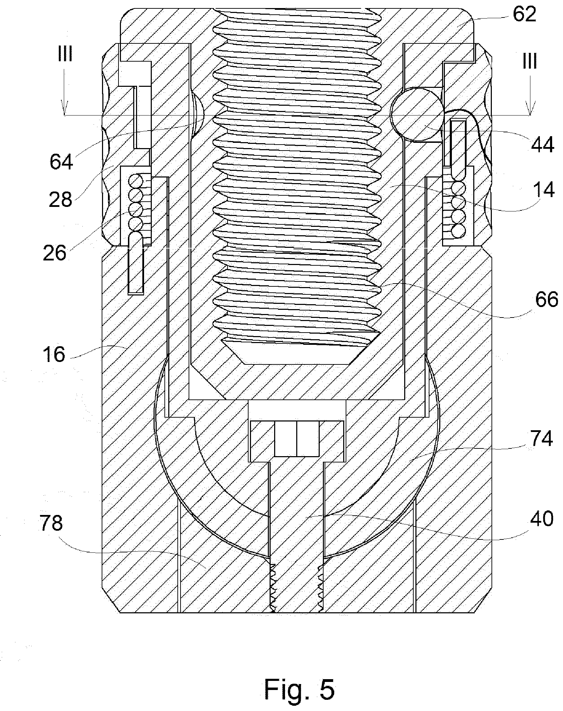

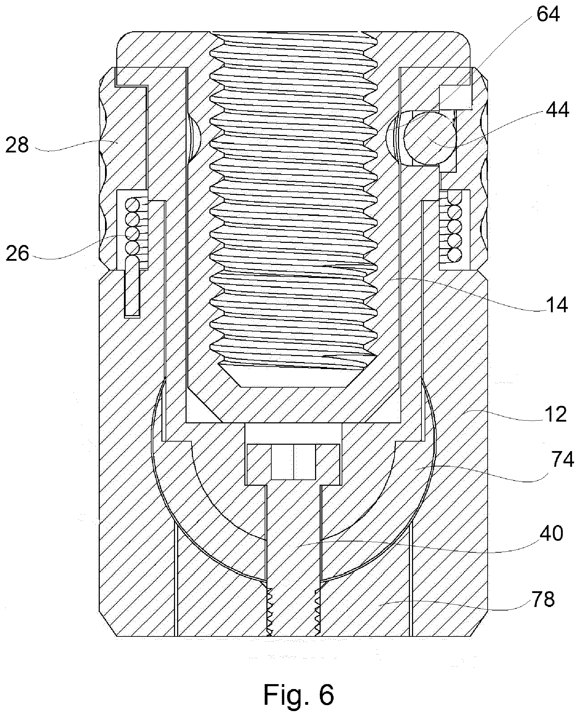

With the various parts of the connector 10 in the assembled condition, and the insert 14 inserted into the pod 12, the helical torsion spring 26 urges the ring 28 in the sense of the arrow in Figure 3 to bring the cams 52 into a position in which they hold the ball-bearings 44 in an engagement position in which they protrude through the inside ends 46 of the cavities 42, into respective ones of the recesses 64 of the insert 14, as shown in Figures 3 and 5. This holds all the parts locked stationary together, including the insert 14 within the pod 12. The only readily moveable part in this condition is rotation of the ring 28 against the restoring force of the spring 26. This brings the cams 52 away from the ball-bearings 44 so that the insert 16 can be lifted out of the pod 12 as the ball-bearings 44 are now free to retreat out of the recesses 64 as shown in Figures 4 and 6.

The insert 14 can be reinserted and locked in the pod 12 by first rotating the ring 28 against the restoring force of the spring 26, inserting the insert 14 into the pod 12, releasing the ring 28, and if necessary rotating the insert 14 until portions of the ball-bearings 44 snap into the recesses 64.

Figure 7 shows two quick-release connectors 10 each as shown in Figure 2 with respective bite detectors 80 one of which is held by its associated connector 10 on the buzz bar 82 and the other of which is to be so held as shown in that Figure. Figure 7 also shows at the middle of the buzz bar 82 a modified form of quick-release connector having all the features of that shown in Figure 1 except that the flange 62 is replaced by a large head 84 with a through-hole 86 through which extends the buzz bar 82, the internal screwthread being much smaller to receive a fixing screw 88 to fix the buzz bar 82 relative to the central connector 10, which is attached to the top of a bank-stick 90.

Many variations and modifications may occur to the reader without taking the resulting construction outside the scope of the present invention. To give an example only, the cavities 42 could be a little smaller in diameter, and the ball-bearings 44 could be replaced by elongate locking members with rounded ends.

The scope of protection of the current invention is defined by the appended claims.

## Claims

1. A quick-release connector (10) for connecting a first part constituted by an angling device to a second part constituted by a bank stick or a buzz bar or other angling device, the quick-release connector (10) comprising an insert (14) having a circular cross-section and being secured to one of such first and second parts when the connector (10) is in use, and a pod (12) having a recess of circular cross-section to receive the insert (14) and being secured to the other of such first and second parts when the connector (10) is in use, the connector (10) further comprising at least one displaceable locking member (44) retained within the pod (12) and being displaceable relative to the pod (12) between an engagement position in which it engages the insert (14) when the connector (10) is in use to lock the insert (14) and the pod (12) and hence such first and second parts together when the connector (10) is in use, and a non-engagement position in which it does not so engage the insert (14), and a locking component (28) retained on the pod (12) and moveable between a first position in which it holds the displaceable locking member (44) in the said engagement position and a second position in which the locking member (44) is released from the said engagement position, in which
the movement of the locking component (28) between its said first and second positions is a rotary movement, **characterised in that** the insert (14) is provided with at least one recess (64) on an outer surface (60) to receive the said at least one displaceable locking member (44).

2. A quick-release connector (10) according to claim 1, **characterised in that** the said at least one displaceable locking member (44) that is retained within the pod comprises a ball-bearing.

3. A quick-release connector (10) according to claim 1 or claim 2, **characterised in that** the said at least one recess (64) is part spherical.

4. A quick-release connector (10) according to claim 2 and claim 3, **characterised in that** the respective radii of curvature of the ball-bearing (44) and the said at least one recess (64) match.

5. A quick-release connector (10) according to any preceding claim, **characterised in that** the pod (12) is provided with at least one guide cavity (42) within which the said at least one locking member (44) is retained and within which the said at least one locking member (44) is guided between the said engagement and non-engagement positions.

6. A quick-release connector (10) according to claim 5, **characterised in that** there are a plurality of such cavities (42) spaced apart around the pod (12) and retaining respective locking members (44), and a plurality of recesses (64) spaced apart around the insert (14) , the angular spacing of the cavities (42) and the recesses (64) being the same to enable them to be brought into registration with one another.

7. A quick-release connector (10) according to any preceding claim, **characterised in that** the said locking component (28) comprises a ring.

8. A quick-release connector (10) according to claim 7, **characterised in that** the ring (28) is provided with at least one internal cam (52) which engages the said at least one locking member (44) when the connector(10) is in use to move the locking member (44) from its said non-engagement position to its said engagement position as the ring (28) is rotated.

9. A quick-release connector (10) according to any preceding claim, **characterised in that** it further comprises a spring (26) attached to the pod (12) and the locking component (28) in such a manner as to urge the locking component (28) towards its said first position.

10. A quick-release connector (10) according to claim 9, **characterised in that** the spring (26) is a helical torsion spring.

11. A quick-release connector (10) according to any preceding claim, **characterised in that** the pod (12) is provided with an aperture (72) for a buzz bar (76).

12. A quick-release connector (10) according to claim 11, **characterised in that** the pod (12) is provided with a removable cap portion (78) to facilitate securement of the pod (12) to the buzz bar (76).

13. A quick-release connector (10) according to any preceding claim, **characterised in that** a bolt (40) secures components of the pod (12) to one another.

14. An assembly comprising an angling device such as a bite detector (80) connected to another angling device such as a bank stick or buzz bar (82) by one or more quick-release connectors (10) as claimed in any preceding claim.

## Patentansprüche

1. Schnelltrennverbinder (10) zum Verbinden eines ersten Teils, das durch eine Angelvorrichtung gebildet wird, mit einem zweiten Teil, das durch einen Bankstick oder eine Buzzbar oder eine andere Angelvorrichtung gebildet wird, wobei der Schnelltrennverbinder (10) einen Einsatz (14) mit einem kreisförmigen Querschnitt aufweist, der an einem dieser ersten und zweiten Teile befestigt ist, wenn der Verbinder (10) verwendet wird, und eine Hülse (12) mit einer Aussparung mit kreisförmigem Querschnitt, um den Einsatz (14) aufzunehmen, und die an dem anderen dieser ersten und zweiten Teile befestigt ist, wenn der Verbinder (10) verwendet wird, wobei der Verbinder (10) ferner mindestens ein verschiebbares Verriegelungselement (44), das innerhalb der Hülse (12) gehalten wird und relativ zu der Hülse (12) zwischen einer Eingriffsposition, in der es mit dem Einsatz (14) in Eingriff steht, wenn der Verbinder (10) verwendet wird, um den Einsatz (14) und die Hülse (12) und somit diese ersten und zweiten Teile miteinander zu verriegeln, wenn der Verbinder (10) verwendet wird, und einer Nichteingriffsposition verschiebbar ist, in der es nicht so mit dem Einsatz (14) in Eingriff steht, und eine Verriegelungskomponente (28) aufweist, die an der Hülse (12) gehalten wird und zwischen einer ersten Position, in der sie das verschiebbaren Verriegelungselement (44) in der Eingriffsposition hält, und einer zweiten Position, in der das Verriegelungselement (44) aus der Eingriffsposition freigegeben ist, beweglich ist, wobei die Bewegung der Verriegelungskomponente (28) zwischen ihrer ersten und zweiten Position eine Drehbewegung ist, **dadurch gekennzeichnet, dass** der Einsatz (14) mindestens eine Aussparung (64) an einer Außenfläche (60) aufweist, um das mindestens eine verschiebbare Verriegelungselement (44) aufzunehmen.

2. Schnelltrennverbinder (10) nach Anspruch 1, **dadurch gekennzeichnet, dass** das mindestens eine verschiebbare Verriegelungselement (44), das in der Hülse gehalten wird, ein Kugellager aufweist.

3. Schnelltrennverbinder (10) nach Anspruch 1 oder 2, **dadurch gekennzeichnet, dass** die mindestens eine Aussparung (64) teilweise kugelförmig ist.

4. Schnelltrennverbinder (10) nach Anspruch 2 und 3, **dadurch gekennzeichnet, dass** die jeweiligen Krümmungsradien des Kugellagers (44) und der mindestens einen Aussparung (64) übereinstimmen.

5. Schnelltrennverbinder (10) nach einem der vorstehenden Ansprüche, **dadurch gekennzeichnet, dass** die Hülse (12) mindestens einen Führungshohlraum (42) aufweist, in dem das mindestens eine Verriegelungselement (44) gehalten wird und in dem das mindestens eine Verriegelungselement (44) zwischen der Eingriffs- und der Nichteingriffsposition geführt wird.

6. Schnelltrennverbinder (10) nach Anspruch 5, **dadurch gekennzeichnet, dass** eine Vielzahl solcher Hohlräume (42) vorhanden ist, die um die Hülse (12) herum beabstandet sind und entsprechende Verriegelungselemente (44) halten, sowie eine Vielzahl von Aussparungen (64), die um den Einsatz (14) herum beabstandet sind, wobei der Winkelabstand der Hohlräume (42) und der Aussparungen (64) gleich ist, damit sie miteinander zur Deckung gebracht werden können.

7. Schnelltrennverbinder (10) nach einem der vorstehenden Ansprüche, **dadurch gekennzeichnet, dass** die Verriegelungskomponente (28) einen Ring aufweist.

8. Schnelltrennverbinder (10) nach Anspruch 7, **dadurch gekennzeichnet, dass** der Ring (28) mindestens einen Nocken (52) aufweist, der mit dem mindestens einen Verriegelungselement (44) in Eingriff steht, wenn der Verbinder (10) verwendet wird, um das Verriegelungselement (44) aus seiner Nichteingriffsposition in seine Eingriffsposition zu bewegen, wenn der Ring (28) gedreht wird.

9. Schnelltrennverbinder (10) nach einem der vorstehenden Ansprüche, **dadurch gekennzeichnet, dass** er ferner eine Feder (26) aufweist, die an der Hülse (12) und der Verriegelungskomponente (28) derart angebracht ist, dass sie die Verriegelungskomponente (28) in ihre erste Position drückt.

10. Schnelltrennverbinder (10) nach Anspruch 9, **dadurch gekennzeichnet, dass** die Feder (26) eine schraubenförmige Torsionsfeder ist.

11. Schnelltrennverbinder (10) nach einem der vorstehenden Ansprüche, **dadurch gekennzeichnet, dass** die Hülse (12) eine Öffnung (72) für eine Buzzbar (76) aufweist.

12. Schnelltrennverbinder (10) nach Anspruch 11, **dadurch gekennzeichnet, dass** die Hülse (12) einen abnehmbaren Kappenabschnitt (78) aufweist, um das Befestigen der Hülse (12) an der Buzzbar (76) zu erleichtern.

13. Schnelltrennverbinder (10) nach einem der vorstehenden Ansprüche, **dadurch gekennzeichnet, dass** ein Bolzen (40) die Komponenten der Hülse (12) aneinander befestigt.

14. Baugruppe, die eine Angelvorrichtung, wie beispielsweise einen Bissanzeiger (80), aufweist, der mit einer anderen Angelvorrichtung, wie beispielsweise einem Bankstick oder einer Buzzbar (82), durch einen oder mehrere Schnelltrennverbinder (10) nach einem der vorstehenden Ansprüche verbunden ist.

## Revendications

1. Connecteur (10) à dégagement rapide pour connecter une première partie constituée par un dispositif de pêche à la ligne à une seconde partie constituée par une pique ou une barre sonore ou un autre dispositif de pêche à la ligne, le connecteur (10) à dégagement rapide comprenant un insert (14) présentant une section transversale circulaire et étant fixé à l'une de ces première et seconde parties lorsque le connecteur (10) est en cours d'utilisation, et une cosse (12) présentant un évidement de section transversale circulaire pour recevoir l'insert (14) et étant fixé à l'autre de ces première et seconde parties lorsque le connecteur (10) est en cours d'utilisation, le connecteur (10) comprenant en outre au moins un élément (44) de verrouillage déplaçable retenu à l'intérieur de la cosse (12) et pouvant être déplacé par rapport à la cosse (12) entre une position d'engagement dans laquelle il vient en prise avec l'insert (14) lorsque le connecteur (10) est en cours d'utilisation pour verrouiller l'insert (14) et la cosse (12) et donc ces première et seconde parties lorsque le connecteur (10) est en cours d'utilisation, et une position de non-engagement dans laquelle il n'engage pas ainsi l'insert (14), et
un composant (28) de verrouillage retenu sur la cosse (12) et mobile entre une première position dans laquelle il maintient l'élément (44) de verrouillage déplaçable dans ladite position d'engagement et une seconde position dans laquelle l'élément (44) de verrouillage est libéré de ladite position d'engagement, dans lequel le mouvement du composant (28) de verrouillage entre ses première et seconde positions est un mouvement rotatif,
**caractérisé en ce que** l'insert (14) est pourvu avec au moins un évidement (64) sur une surface externe (60) pour recevoir ladite au moins un élément (44) de verrouillage déplaçable.

2. Connecteur (10) à dégagement rapide selon la revendication 1, **caractérisé en ce que** ledit au moins un élément (44) de verrouillage déplaçable qui est retenu à l'intérieur de la cosse comprend un roulement à billes.

3. Connecteur (10) à dégagement rapide selon la revendication 1 ou 2, **caractérisé en ce que** ledit au moins un évidement (64) est en partie sphérique.

4. Connecteur (10) à dégagement rapide selon la revendication 2 et la revendication 3, **caractérisé en ce que** les rayons de courbure respectifs du roulement à billes (44) sont en correspondance avec au moins un évidement (64).

5. Connecteur (10) à dégagement rapide selon l'une quelconque des revendications précédentes, **caractérisé en ce que** la cosse (12) est pourvu d'au moins une cavité de guidage (42) à l'intérieur de laquelle ledit au moins un élément (44) de verrouillage est retenu et à l'intérieur de laquelle ledit au moins un élément (44) de verrouillage est guidé entre lesdites positions d'engagement et de non-engagement.

6. Connecteur (10) à dégagement rapide selon la revendication 5, **caractérisé en ce qu'**il existe une pluralité de telles cavités (42) espacées autour de la cosse (12) et retenant les éléments (44) de verrouillage respectifs, et une pluralité d'évidements (64) espacés autour de l'insert (14), l'espacement angulaire des cavités (42) et les évidements (64) étant les mêmes pour permettre de les aligner les uns avec les autres.

7. Connecteur (10) à dégagement rapide selon l'une quelconque des revendications précédentes, **caractérisé en ce que** ledit composant (28) de verrouillage comprend un anneau.

8. Connecteur (10) à dégagement rapide selon la revendication 7, **caractérisé en ce que** l'anneau (28) est pourvu d'au moins une came (52) interne qui engage ledit au moins un élément (44) de verrouillage lorsque le connecteur (10) est en cours d'utilisation pour déplacer l'élément (44) de verrouillage de sa dite position de non-engagement vers sa dite position d'engagement lorsque la bague (28) est tournée.

9. Connecteur (10) à dégagement rapide selon l'une quelconque des revendications précédentes, **caractérisé en ce qu'**il comprend en outre un ressort (26) fixé à la cosse (12) et au composant (28) de verrouillage de manière à pousser le composant (28) de verrouillage vers sa dite première position.

10. Connecteur (10) à dégagement rapide selon la revendication 9, **caractérisé en ce que** le ressort (26) est un ressort de torsion hélicoïdal.

11. Connecteur (10) à dégagement rapide selon l'une quelconque des revendications précédentes, **caractérisé en ce que** la cosse (12) est pourvue d'une ouverture (72) pour une barre sonore (76).

12. Connecteur (10) à dégagement rapide selon la revendication 11, **caractérisé en ce que** la cosse (12) est pourvue d'une partie de capuchon (78) amovible pour faciliter la fixation de la cosse (12) à la barre sonore (76).

13. Connecteur (10) à dégagement rapide selon l'une quelconque des revendications précédentes, **caractérisé en ce qu'**un boulon (40) fixe les composants de la cosse (12) les uns aux autres.

14. Ensemble comprenant un dispositif de pêche à la ligne tel qu'un détecteur (80) de morsure connecté à un autre dispositif de pêche à la ligne tel qu'une pique ou une barre sonore (82) par un ou plusieurs connecteurs (10) à dégagement rapide selon l'une quelconque des revendications précédentes.
